# EUROPÄISCHE PATENTSCHRIFT

(11) **EP 0 401 580 B1**
(45) Veröffentlichungstag und Bekanntmachung des Hinweises auf die Patenterteilung: **22.02.1995**
(21) Anmeldenummer: 90109521.6
(22) Anmeldetag: 19.05.1990
(51) Int. Cl.: D06M 23/14, D06M 11/83, B29C 51/14, B01J 32/00, B01J 19/30

(54) **Dreidimensional verformter, metallisierter Netzwerkstoff, Verfahren zu seiner Herstellung und seine Verwendung**
Three dimensionally shaped metallized net, process for its preparation and its use
Filet métallisé, déformé tridimensionnellement, procédé pour sa préparation et son utilisation

(30) Priorität: 23.05.1989 DE 3916713
(43) Veröffentlichungstag der Anmeldung: 12.12.1990
(73) Patentinhaber: HOECHST AKTIENGESELLSCHAFT, 65926 Frankfurt am Main (DE)
(72) Erfinder: Disselbeck, Dieter, D-6232 Bad Soden am Taunus (DE)

(56) Entgegenhaltungen:
- EP-A- 0 109 505
- DE-A- 3 729 633

## Beschreibung

Dreidimensional verformter, metallisierter Netzwerkstoff, Verfahren zu seiner Herstellung und seine Verwendung.

Die vorliegende Erfindung betrifft einen dreidimensional verformten, formstabilen, elektrisch leitfähigen Netzwerkstoff auf der Basis eines tiefziehfähigen flächenförmigen, beharzten Textilmaterials, ein Verfahren zu seiner Herstellung und seine Verwendung als Füllkörper für Kolonnen, Katalysator und Katalysatorträger und zur Herstellung von elektrisch leitfähigen Sandwichstrukturen und von formstabilen leichtgewichtigen elektrischen Abschirmungen.

Flächenförmige Sandwichkörper aus einem Kern und zwei Deckschichten, deren Kern aus formstabilen dreidimensional verformten Flächengebilden auf der Basis von Fasermaterialien besteht, sind bereits z.B. aus der FR-A-23 25 503, der EP-A-158 234 und der DE-A-37 29 633 bekannt. Das in diesen Druckschriften beschriebene Sandwichmaterial hat einen Kern aus einem dreidimensional verformten, flächenförmigen Textilmaterial, welches auf einer Basisfläche in regelmäßiger Anordnung eine Vielzahl von Erhebungen mit gleicher Höhe und flachem Plateau aufweist.
Erhebliche Unterschiede zwischen den aus der FR-A-23 25 503 einerseits und den aus der EP-A-158 234 und der DE-A-37 29 633 bekannten Kernmaterialien bestehen bezüglich ihrer Struktur. Während die aus FR-A-23 25 503 bekannten Materialien eine im wesentlichen vollständig geschlossene Struktur zeigen, bei der sowohl die Grundflächen als auch die Wandungen der auf der Grundfläche verteilten Erhebungen eine massive, porenfreie faserdurchzogene Harzmasse bilden, stellen die aus der EP-A-158 234 und der DE-A-37 29 633 bekannten Kernmaterialien eine Netzwerkstruktur aus harzimprägnierten Fäden mit offenen Maschen dar. Das Material der EP-A-158 234 und der DE-A-37 29 633 unterscheiden sich nur dadurch, daß das in der DE-A-37 29 633 beschriebene Material zusätzlich zu der Netzstruktur ein mit dieser auf der gesamten verformten Fläche eng verbundenes Wirrvlis aufweist. Dieses Vlies dient in erster Linie der Verstärkung der Netzwerkstruktur. Die offene Maschenstruktur des Netzwerks bleibt aber weitgehend erhalten.

Dieser fundamentale Unterschied der aus den genannten Druckschriften bekannten Materialien beruht auf ihrer Herstellung, die auf grundsätzlich unterschiedliche Weise erfolgt.

Die Herstellung des aus der FR-A-23 25 503 bekannten Kernmaterials mit geschlossener Struktur erfolgt durch Pressen eines harzgetränkten Stapelfaserhaufwerks in eine Preßform der gewünschten geometrischen Gestalt. Dabei wird, bezogen auf das Fasergewicht, eine relativ hohe Harzmenge eingesetzt, so daß sich nach dem Pressen ein im wesentlichen faserverstärkter Harzformkörper ergibt. Das so erhaltene Kernmaterial hat ein relativ hohes Gewicht. Es gestattet keinen Gasaustausch und es zeigt eine geringe Flexibilitat.

Im Gegensatz dazu wird das aus der EP-A-158 234 und der DE-A-37 29 633 bekannte netzstrukturierte Kernmaterial hergestellt durch Tiefziehen eines mit relativ wenig Hart imprägnierten tiefziehfähigen Texilmaterials wie z.B. einer harzimprägnierten Maschenware (Gewirke, Gestrick), d.h. einer textilen Schicht aus Fäden oder Garnen, die in regelmäßiger Anordnung gegeneinander festgelegt und gesichert sind.
Zur Herstellung des aus der DE-A-37 29 633 bekannten Netzwerkstoffs wird eine Kombination aus dem Textilmaterial mit der regelmäßigen Fadenanordnung und einem Vliesstoff in entsprechender Weise beharzt und tiefgezogen.
Die aus der EP-A-158 234 und der DE-A-37 29 633 bekannten Kernmaterialien haben bei guter mechanischer Stabilitat ein sehr niedriges Raumgewicht. Sie gestatten einen freien Gasaustausch zwischen den Seiten der Fläche und weisen eine hohe Flexibilität auf.
Naturgemäß haben weder die aus der EP-A-158 234 und der DE-A-37 29 633 bekannten noch das in der FR-A-23 25 503 beschriebene Kernmaterial eine nennenswerte elektrische Leitfähigkeit.

In der EP-A-0 109 505 wird ein Abschirmmaterial beschrieben, das jedoch keine metallisierten Kunststoffoberflächen aufweist.
Vielmehr wird bei diesem bekannten Abschirmmaterial mindestens eine Thermoplast-Schicht mit einer Abschirmschicht kombiniert, die aus einer Graphilfaser-Matte, verschiedenen Metallfaser-Matten, Streckmetallflächen, Metalldrahtgeweben, Metalldrahtgestricken oder auch aus Polyestergewebe besteht, in das Metallfäden eingewebt sind.
Die Thermoplast-Schicht und die Abschirm-Schicht können zu einem Composit-Material verbunden sein, wobei die beiden Schichten übereinanderliegend miteinander verbunden sind oder die Abschirm-Schicht kann in die Thermoplast-Schicht eingebettet sein.
Die Lehre dieser Druckschritt zeigt, daß es dem Fachmann garnicht in den Sinn kam, die Thermoplast-Schicht zu metallisieren; vielmehr kombinierte er sie mit einer Schicht metallischer Leiter oder Graphitfasern.

Es wurde nun überraschenderweise gefunden, daß es möglich ist, auch elektrisch leitfähige, dreidimensional verformte und formstabile Netzwerkstoffe auf der Basis harzimprägnierter Textilmaterialien herzustellen, die - wie die aus der EP-A-158 234 und der DE-A-37 29 633 bekannten Kernmaterialien - eine filigranartige Netzstruktur mit offenen Maschen aufweisen.

Es ist bereits bekannt, Formkörper aus einer Reihe organischer Materialien mit einem metallischen Überzug zu versehen. Eine Übersicht über die hierzu erforderlichen Maßnahmen ist z.B. der Monographie "Praktische Galvanotechnik", Eugen G. Leuze Verlag, zu entnehmen. Bisher sind vorzugsweise Mischpolymerisate aus Acrylnitril, Butadien und Styrol (ABS-Kunststoffe) galvanisiert worden, da durch oberflächliches Herauslösen (Beizen) von Butadien aus dem Polymergerüst Kavernen entstehen, in denen sich der Metallüberzug verankern kann (Druckknopfeffekt). Unter Einsatz einer modifizierten Oberflächenaktivierung sind auch bereits z.B. Polypropylen, Nylon und - unter Einschaltung komplizierter Vorbehandlungsstufen - Epoxid- oder Duroplastharze oberflächlich metallisiert worden. Wie man der obengenannten Monographie "Praktische Galvanotechnik" entnehmen kann (vgl. S. 354, Abschnitt 9.4, Zeilen 1 - 3), ist als besonders wichtig eine im Hinblick auf die Metallisierung vorgeplante "galvanisierungsgerechte Konstruktion" der Kunststoff-Formlinge anzusehen. Insbesondere ergeben sich häufig Probleme, wenn die Kunststoff-Formteile innere Spannungen aufweisen.

Es war daher höchst überraschend, daß es möglich ist, einen Verbundstoff aus einem beharzten Textilmaterial, der in Form einer dreidimensional verformten Netzstruktur vorliegt, die sich einerseits aus der bei ihrer Herstellung zwangsläufig erfolgenden Maschenöffnung des textilen Ausgangsmaterials ergibt, die andererseits bezüglich ihrer anwendungsbezogenen Eigenschaftskombination von z.B. Leichtgewichtigkeit, Durchlässigkeit und hoher mechanischer Stabilitat optimiert ist, nicht aber den Prinzipien "galvanisierungsgerechter Konstruktion" entspricht, und wobei der Textilfaseranteil in aller Regel von der Herstellung des Fasermaterials und dem Tiefziehprozeß her noch gewisse innere Spannungen aufweist, zur Erzielung einer elektrisch leitenden Oberfläche mit einem festhaftenden Metallüberzug zu versehen.

Ein Gegenstand der vorliegenden Erfindung ist somit ein dreidimensional verformter formstabiler Netzwerkstoff dessen offene Maschen von den durch Tiefziehen gedehnten Maschen eines beharzten Gewebes oder einer beharzten Maschenware gebildet werden und das dadurch gekennzeichnet ist, daß es eine metallisiert Oberfläche hat wobei der oberflächliche Metallüberzug eine Dicke von bis zu 300 »m aufweist.

Die elektrisch leitfähige Oberfläche des erfindungsgemäßen Netzwerkstoffs besteht - wie oben angegeben - aus einem auf dem beharzten Textilmaterial fest haftenden dünnen Metallüberzug. Die Dicke des oberflächlichen Metallüberzugs beträgt bis zu 300, vorzugsweise 20 bis 100 »m. Im Hinblick auf die Haltbarkeit des elektrisch leitfähigen, oberflächlichen Metallüberzugs ist es zweckmäßig, hierfür solche Metalle auszuwählen, die unter Normalbedigungen nicht korrodieren, d.h. daß sie sich bei normalen Umgebungstemperaturen in trockener oder feuchter Luft entweder überhaupt nicht verändern oder nach Bildung eines oberflächlichen Oxid- oder Carbonatüberzugs keiner weiteren Veränderung unterliegen. Zum ersten Typ der leitfähigen Metallüberzüge zählen solche aus Edelmetallen, wie z.B. Gold oder Platinmetallen. Zum zweiten Überzugstyp zählen Metallüberzüge aus weniger edlen Metallen wie z.B. aus Silber, Kupfer, Blei, Zinn, Aluminium und dergleichen.

Der elektrisch leitfähige Metallüberzug des erfindungsgemäßen Netzwerkstoffs kann auch mehrschichtig sein; so kann z.B. auf eine erste Metallschicht aus Kupfer eine sehr dünne Edelmetallschicht folgen oder es kann auf einer relativ dünnen Schicht aus Kupfer oder Nickel eine stärkere Schicht anderer Metalle folgen. Sofern die Deckschicht aus einem anderen Metall als Kupfer, Nickel oder Gold besteht, ist ein mehrschichtiger Metallüberzug besonders bevorzugt, bei dem die unmittelbar auf dem organischen Material des Netzwerkstoffs aufliegende Schicht aus Kupfer, Nickel oder Gold, vorzugsweise Kupfer oder Nickel, insbesondere aber aus Kupfer besteht.

Der elektrisch leitende Metallüberzug des erfindungsgemaßen Netzwerkstoffs kann auch aus einer Mischung verschiedener Metalle, vorzugsweise solcher, die miteinander Legierungen bilden, wie z.B. aus einer Mischung von Blei und Zinn, bestehen.

Insbesondere wird der metallische Überzug der erfindungsgemäßen Netzwerkstoffe von Metallen gebildet, die in der elektrochemischen Spannungsreihe, bezogen auf Wasserstoff, ein Normalpotential von -1,3 bis +1,6, vorzugsweise -0,8 bis +1,6 V aufweisen.

Bevorzugt für den metallischen Überzug der erfindungsgemäßen Netzwerkstoffe sind insbesondere Zinn, Blei, eine Blei/Zinn-Mischung, Kupfer, Nickel, Süber, Gold oder Platinmetalle, wobei insbesondere Gold oder die Platinmetalle auch als Deckschicht auf einer Grundschicht aus einem der vorher genannten Metalle, insbesondere aus Kupfer oder Nickel, angewendet werden können. Vorzugsweise findet sich dabei unmittelbar auf dem Polymermaterial des Netzwerkstoffs eine relativ dünne Metallschicht aus Nickel oder Gold und insbesondere aus Kupfer, auf der dann weitere stärkere Metallschichten der übrigen oben genannten Metalle folgen.

Die offenen Maschen der filigranartigen Netzstruktur des erfindungsgemaßen elektrisch leitfähigen Netzwerkstoffs sind ein charakteristisches geometrisches Merkmal dieses Materials. Sie werden von den durch Tiefziehen gedehnten Maschen eines flächenförmigen Textilmaterials, wie z.B. eines durch dehnbare Schußfäden fixierten Kreuzgeleges, einer Raschelware oder eines Gewebes oder insbesondere aber einer Maschenware gebildet. Wird als Basismaterial für den erfindungsgemäßen Netzwerkstoff ein Kreuzgelege, in dem die Filamentbündel sich etwa in Winkeln von 5 bis 30° kreuzen, oder ein Gewebe eingesetzt, so ist es erforderlich, daß das flächenförmige Textilmaterial aus Fasern besteht, oder zumindest solche in einem wirksamen Anteil enthält, die selbst eine relativ hohe Dehnfähigkeit aufweisen, die reversibel oder nichtreversibel sein kann, damit die ausreichende Tiefziehfähigkeit des Materials gegeben ist. Weitgehend unabhängig von der Dehnfähigkeit des Fasermaterials dagegen ist die Tiefziehfähigkeit von Maschenware. Es ist daher bevorzugt, als Basis für die Herstellung der erfindungsgemäßen elektrisch leitfähigen Netzwerkstoffe, eine Maschenware einzusetzen. Das Fasermaterial der flächenförmigen Textilmaterialien ist im Prinzip von untergeordneter Bedeutung. Man wird es jedoch so auswählen, daß es dem vorgesehenen Einsatzzweck in optimaler Weise zu genilgen verspricht. Während die physikalischen Eigenschaften von Naturfasern nur im begrenzten Rahmen zu beeinflussen sind, können die physikalischen Eigenschaften von Synthesefasern optimal dem gewünschten Einsatzzweck angepaßt werden. Es ist daher besonders bevorzugt, zur Herstellung der erfindungsgemäßen, elektrisch leitfähigen Netzwerkstoffe, von Synthesefasermaterialien, wie z.B. Polyamiden, Polyacrylnitril, Polyolefinfasern, insbesondere aber von Polyestermaterialien auszugehen. Besonders bevorzugt sind hier wiederum solche Typen, die eine besonders hohe mechanische Festigkeit aufweisen. Ein Beispiel für derartige Fasermaterialien ist das Handelsprodukt ^{(R)}TREVIRA hochfest. Für spezielle Einsatzzwecke können auch schwer brennbare Synthesefasermaterialien wie z.B. ^{(R)}TREVIRA CS oder auch endgruppenverschlossene Polyestermaterialien, die besonders widerstandsfähig sind gegen chemische Einflüsse, eingesetzt werden. Die erfindungsgemäßen dreidimensional verformten, elektrisch leitfähigen Netzwerkstoffe sind durch eine Harzimprägnierung des Textilmaterials formstabilisiert.

Die in den erfindungsgemäßen Netzwerkstoffen enthaltenen formstabilisierenden Harze, können den verschiedenen bekannten thermoplastischen oder duroplastischen Harzgruppen entstammen, sofern ihre mechanischen Eigenschaften die Formstabilisierung der erfindungsgemäßen Netzwerkstoffe zulassen. Beispiele für geeignete thermoplastische Harze sind Polyacrylate oder Polyvinylchlorid; bevorzugte Harze sind jedoch Duroplaste, wie z.B. Melamin- und insbesondere Phenolharze.

Die in den dreidimensional verformten, erfindinngsgemäßen Netzwerkstoffen enthaltene Harzmenge ist auf das Gewicht des Textilmaterials so abgestimmt, daß sich beim Tiefziehen des flächenförmigen Textilmaterials die Maschen zu einem filigranen Netzwerk öffnen. Geeignete Auflagenmengen liegen im Bereich von 50 bis 500, vorzugsweise 100 bis 300 g Harz/m² des unverstreckten Textilmaterials. Innerhalb dieser angegebenen Bereiche wird die Harzmenge noch zweckmäßig an das Quadratmetergewicht des tiefziehfähigen Textilmaterials angepaßt. So wird man bei Einsatz eines schweren Textilmaterials innerhalb der oberen Hälfte der angegebenen Bereiche arbeiten, bei leichten Textilmaterialien in der unteren Hälfte. Das ausschlaggebende Kriterium ist, wie oben angegeben, die Bedingung, daß sich beim Tiefziehvorgang die Maschen des Textilmaterials zu einem Netzwerk öffnen.

Der erfindungsgemäße dreidimensional verformte Netzwerkstoff weist eine Vielzahl von Verformungen auf, die sich wenigstens in eine Richtung erstrecken, die eine Komponente senkrecht zur ursprünglichen Ebene des textilen Flächengebildes aufweist, aus dem der erfindungsgemäße Netzwerkstoff hergestellt wurde.

In einer besonders im Hinblick auf die weitere Verwendung als Kernmaterial für die Herstellung von Sandwichstrukturen spezifizierten Ausführungsform, weist der erfindungsgemäße Netzwerkstoff auf einer Basisfläche in regelmäßiger Anordnung eine Vielzahl von Erhebungen auf. In einer weiteren Ausführungsform weist der erfindungsgemäße Netzwerkstoff auf der Ebene der ursprünglichen Basisfläche in regelmäßiger Anordnung eine Vielzahl von Erhebungen und Vertiefungen auf. Die Erhebungen und Vertiefungen können die Form von Näpfchen mit runder oder eckiger Basisfläche oder z.B. die Form von Stegen haben. Im Hinblick auf eine gute Haftung zwischen dem als Kernmaterial für Sandwichformkörper einzusetzenden erfindungsgemäßen Netzwerkstoff und den Deckflächen ist es besonders vorteilhaft, wenn die Erhebungen oben ein flaches Plateau bzw. die Vertiefungen einen flachen Boden aufweisen. Besonders bevorzugt ist es auch, wenn die Plateauflächen der Erhebungen bzw. die Bodenflächen der Vertiefungen alle in einer Ebene und parallel zur Basisfläche liegen. Gleichfalls im Hinblick auf eine gute Haftung zwischen dem Kernmaterial und aufgebrachten Deckflächen ist es von Vorteil, wenn Zahl, Größe, Form und räumliche Anordnung der Verformungen pro Flächeneinheit des Flächengebildes so ausgewählt werden, daß das rechnerische Produkt aus den Flächengrößen der ursprünglichen Ebene und der Größe der Plateauflächen der Erhebungen bzw. der Bodenflächen der Vertiefungen möglichst groß wird.

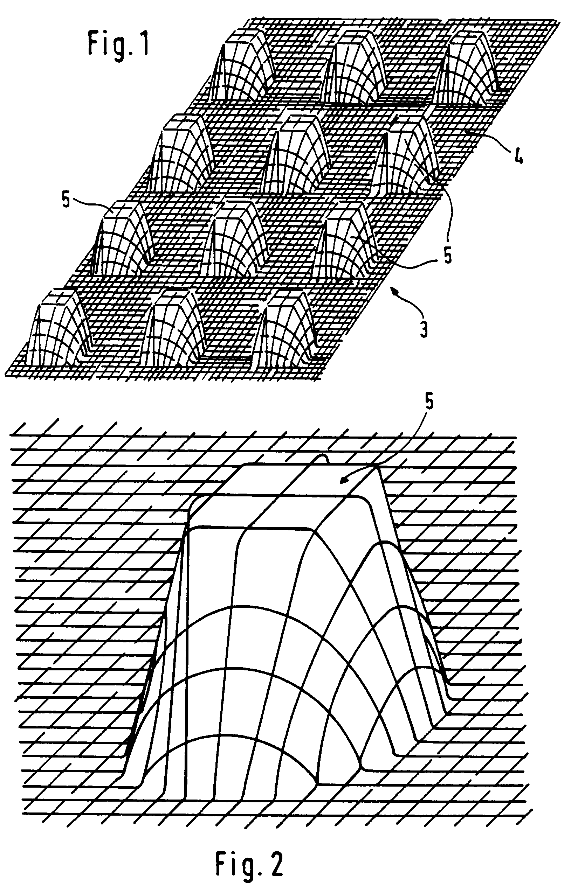

Die Figur 1 veranschaulicht schematisch einen Abschnitt eines erfindinngsgemäßen Netzwerkstoffs (3), der auf einer Basisfläche (4) eine Vielzahl von hütchenförmigen Erhebungen (5) aufweist.
Die Figur 2 zeigt in Vergrößerung die schematische Darstellung einer der hütchenförmigen Verformungen und veranschaulicht deutlich die im Bereich der Verformung auftretende drastische Erweiterung der Maschenstruktur des Textilmaterials.

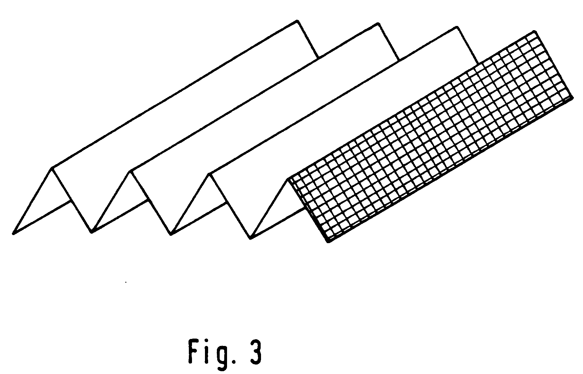

Für andere Einsatzgeblete beispielsweise für die Herstellung selbsttragender Abschirmungen oder für Dekorationszwecke kann der erfindungsgemäße Netzwerkstoff selbstverständlich auch andere dreidimensionale Verformungen aufweisen. Es ist auch durchaus möglich, daß in dem erfindungsgemäßen dreidimensional verformten Netzwerkstoff die Fläche des ursprünglichen Textilmaterials überhaupt nicht mehr erhalten bleibt, wenn beispielsweise das Tiefziehen des Materials durch Stempel von beiden Seiten der Textilfläche her erfolgt, so daß in dem Material näpfchen-bzw. hütchenförmige Ausformungen abwechselnd nach oben und nach unten auftreten oder wenn die ursprüngliche Textilfläche durch eine Vielzahl schmaler, sich in der gleichen Längsrichtung erstreckenden Stempel von beiden Seiten zu einer Zickzackfläche ausgezogen und in dieser Form stabilisiert wird. Ein solches zickzackförmiges Textilmaterial ist in der Figur 3 veranschaulicht. Aus Übersichtlichkeitsgründen ist in dieser Figur die Netzstruktur nur in eine der Zickzackflächen eingezeichnet worden. Auch ist es keineswegs erforderlich, daß die Netzstruktur die in Figur 3 gezeigte regelmäßige quadratische Anordnung aufweist, vielmehr hängt die Form der einzelnen Netzöffnungen von der Struktur des ursprünglichen Textilmaterials ab und weicht bei Einsatz von Maschenware als Ausgangsmaterial erheblich von der gezeigten quadratischen Struktur der Netzöffnungen ab.

Zur Herstellung des erfindungsgemäßen dreidimensional verformten elektrisch leitfähigen Netzwerkstoffs wird zunächst das flächenförmige, tiefziehfähige Textilmaterial, vorzugsweise die Maschenware, mit einem zur mechanischen Stabilisierung der Verformungen geeigneten obengenannten Harz imprägniert. Die Applikation der Harze auf das Textilmaterial kann in üblicher Weise durch Aufstreichen, Bürsten, Rakeln, Pflatschen oder besonders vorteilhaft durch Tauchen erfolgen. Das mit Harz beaufschlagte Gewebe wird anschließend zweckmäßigerweise durch ein Quetschwalzenpaar auf die gewünschte Harzaufnahme abgequetscht. Thermoplastische Harze werden für den Imprägniervorgang zweckmäßigerweise in Form von Lösungen oder vorzugsweise von Emulsionen aufgebracht, hitzehärtbare Harze (Duroplaste) zweckmäßigerweise in der handelsüblichen Form als hochkonzentrierte wäßrige Lösungen oder Dispersionen.

Nach einer eventuellen Zwischentrocknung des harzimprägnierten Textilmaterials wird es dem Tiefziehprozeß bei erhöhter Temperatur unterworfen. Die Temperatur des Tiefziehens wird so gewählt, daß thermoplastische Harze aufgeschmolzen werden können und dabei die Fäden der Netzstruktur vollständig durchdringen. Das Gleiche gilt für Duroplaste; hier wird die Temperatur der Tiefzieheinrichtung so eingestellt, daß der Fließbereich des Duroplasts erreicht wird. nach dem Schmelzen des Harzes wird die Temperatur der Tiefzieheinrichtung so geregelt, daß das Imprägnierharz erhärten kann. Bei Einsatz von Thermoplasten ist hierzu die Temperatur unter den Schmelzpunkt der Thermoplasten zu reduzieren; bei Duroplasten kann die Temperatur des Tiefziehgerätes in der Regel unverändert bleiben, weil die Aushärtung der Duroplasten auch bei erhöhter Temperatur erfolgt. Die Tiefzieheinrichtung wird so lange geschlossen gehalten, bis das stabilisierende Harz vollständig erhärtet ist und die durch Tiefziehen erreichte Struktur des Fasermaterials stabil bleibt.

Nach der Herstellung des dreidimensional verformten Netzwerkstoffs erfolgt dessen oberflächliche Metallisierung. Hierzu wird das Material in an sich bekannter Weise durch Aktivieren des Materials mit einer Edelmetallionen enthaltenden Lösung oder einem Edelmetallkolloid, gegebenenfalls eine anschließende sogenannte Beschleunigungsbehandlung in einer wäßrigen Säure wie z.B. Bor-Fluorwasserstoffsäure, Schwefel-, Salz- oder Oxalsäure für die eigentliche Metallisierung vorbereitet. Danach erfolgt die Abscheidung eines Metallüberzugs, wie z.B. eines Kupfer-, Nickel- oder Goldüberzugs auf dem in der oben genannten Weise vorbehandelten Netzwerkstoff. Die Metallabscheidung erfolgt durch Behandeln des vorbereiteten Netzwerkstoffs mit einer, die betreffenden Metallionen und ein Reduktionsmittel - in der Praxis wird meist Formaldehyd, ein Hypophosphit oder ein Alkaliboranat eingesetzt - enthaltenden wäßrigen Lösung.

Anschließend kann gewünschtenfalls auf der chemisch abgeschiedenen Metallschicht noch eine weitere Schicht des gleichen oder eines anderen Metalls in an sich bekannter Weise elektrolytisch abgeschieden werden.

In speziellen Fällen, z.B. wenn die Kunststoffoberfläche der Netzwerkfäden es verlangt oder besonders hohe Anforderungen an die Haftfestigkeit des Metallüberzugs gestellt werden, ist es zweckmäßig, den Netzwerkstoff durch Behandlung mit einem Quellmittel wie z.B. Aceton, Ethylacetat, Trichloraceton oder Trichloressigsäure und Beizen mit einer wäßrigen, üblicherweise 300 bis 900 g/l Chromsäure und gegebenenfalls Schwefelsäure enthaltenden Lösung, auf die Aktivierung vorzubereiten. Es ist besonders überraschend, daß in der Regel bei der Metallisierung der Netzwerkstoffe auf diese Quell- und Beizbehandlung verzichtet werden kann.

Vorzugsweise erfolgt vor der Aktivierung (Bekeimung) des Netzwerkstoffs eine gründliche Oberflächenreinigung. Diese kann z.B. durch eine Behandlung mit einer wäßrigen alkalischen Tensidlösung, z.B. mit einem handelsüblichen sogenannten Konditionierungsmittel, erfolgen. Als besonders zweckmäßig hat sich eine Reinigungsbehandlung in einem warmen (40 - 70°C) Wasserbad unter Einwirkung von Ultraschall erwiesen. Hierbei ist der Einsatz von entionisiertem Wasser besonders empfehlenswert.

Die Metallisierung des Netzwerkstoffs kann bis zu der gewünschten Stärke des Metallüberzugs ausschließlich durch die oben beschriebene chemische Metallabscheidung erfolgen. Dabei hängt die Stärke der Metallschicht naturgemäß von der Expositionszeit des Netzwerkstoffs in dem Metallisierungsbad ab. In der Regel können pro Stunde ca 2 - 6 »m Metallfilm abgeschieden werden.

Bevorzugt ist die chemische Erzeugung eines Metallfilms haus Kupfer oder Nickel in einer Stärke von 0,5 bis 2»m und anschließende elektrolytische Metallisierung z.B. mit Chrom, Kupfer, Nickel, Blei, Blei/Zinn, Zinn, Gold oder einem Platinmetall, vorzugsweise mit Kupfer, Nickel, Blei, Zinn, einer Blei/Zinn-Mischung oder Gold bis zu einer Stärke des Metallüberzugs von bis zu 300, vorzugsweise 50 bis 100 »m. Den galvanischen Bädern können dabei gewünschtenfalls übliche Glanzmittel zugefügt werden.

Besonders bevorzugt ist bei der kombinierten chemischen und elektrolytischen Metallisierung die chemische Abscheidung eines Kupferfilms weil dieser sehr duktil ist und eine besonders leicht zu aktivierende Oberfläche hat.

Ein weiterer Gegenstand der vorliegenden Erfindung ist ein flächenförmiger Sandwichformkörper bestehend aus zwei äußeren festen Deckschichten, die über einen Kern, bestehend aus dem oben beschriebenen erfindinngsgemäßen, metallisierten, elektrisch leitfähigen Netzwerkstoff, miteinander verbunden sind. Als Kernmaterial wird hierzu der oben beschriebene, zur Herstellung von Sandwichstrukturen besonders bevorzugte Netzwerkstoff eingesetzt, welcher auf einer Grundfläche eine Vielzahl von Erhebungen mit flachen, in einer Ebene liegenden Plateauflächen aufweist. Die Verbindung zwischen den Plateauflächen der Erhebungen bzw. den Bodenflächen der Vertiefungen des erfindinngsgemäßen Kernmaterials und den Deckschichten kann durch übliche Laminierverfahren unter Verwendung von Klebstoffen, insbesondere von kalt- oder hitzehärtenden Klebstoffen, wie z.B. Epoxidharzen oder Duroplastharzen erfolgen. Aufgrund der großen Kontaktfläche zwischen dem Kernmaterial und den Deckschichten erweist sich die Verklebung als überaus stabil. Trotz der Filigranstruktur des erfindungsgemäßen Kernmaterials haben die damit hergestellten Sandwichformkörper eine überraschend hohe Druckfestigkeit bei extrem niedrigem Gewicht. Aufgrund der elektrischen Leitfähigkeit des Kernmaterials können sich längs der Oberfläche des Sandwichkörpers keine nennenswerten Potentialdifferenzen ausbilden. Auch weist ein solches Sandwichmaterial gegenüber elektromagnetischen Wellen gute Dämpfungs- bzw. Reflektionseigenschaften auf. Bei ordnungsgemäßer Verbindung der Kernmaterialien an den Plattenkanten können so aus den spezifisch außerordentlich leichten, mechanisch stabilen Sandwichplatten Räume und Gehäuse aufgebaut werden, die gegen elektromagnetische Störeinflüsse gut abgeschirmt sind.

Das oben beschriebene Herstellungsverfahren für den erfindinngsgemäßen elektrisch leitfähigen Netzwerkstoff beinhaltet die Schwierigkeit, daß ein tiefziehfähiges, d.h. ein relativ stark dehnbares flächenförmiges Textilmaterial mit einem der oben genannten Harze imprägniert werden muß. Durch die Harzaufnahme werden die Gewebe noch schwerer und - sofern es sich um relativ große Flächen handelt - kann es bei diesem Arbeitsgang leicht zu einer örtlichen Vordehnung der Textilmaterialien kommen. Aus einem solchen partiellen Verzug resultieren partielle Unterschiede in der Faserfestigkeit des Materials. Auch bei der Handhabung des noch nicht vorkondensierten, jedoch bereits mit Harz imprägnierten, tiefziehfähigen Textilmaterials kann es leicht zu einer partiellen Vordehnung des Materials kommen, mit den oben erwähnten Nachteilen für die Gleichmäßigkeit der Qualität des Endprodukts, wenn nicht besondere Vorsichtsmaßnahmen getroffen werden. Dieser etwas problematische Schritt des oben beschriebenen Herstellungsverfahrens läßt sich dadurch überwinden, daß man, alternativ zur herkömmlichen Imprägnierung des Gewebes mit Harz, das tiefziehfähige Textilmaterial gemeinsam mit einer handelsüblichen Harzfolie verarbeitet. Bei dieser Methode werden eine oder mehrere Schichten eines tiefziehfähigen Textilmaterials und eine oder mehrere Harzfolien übereinander gestapelt, der Stapel bei einer Temperatur, bei der das Harz fließfähig wird, durch Tiefziehen in die gewünschte Form gebracht und danach die Temperatur so eingestellt, daß das Harz erhärten kann und der geformte Stapel so lange in der gewünschten Form gehalten, bis das Harz vollständig oder hinreichend erhärtet ist, wobei der Begriff hinreichend erhärtet so zu verstehen ist, daß das Harz in diesem Zustand in der Lage ist, das verformte Flächengebilde nach dem Öffnen des Tiefziehwerkzeugs in der gewünschten Form zu stabilisieren. Die bei diesem Verfahren eingesetzten Harzfolien können ebenfalls aus thermoplastischen oder duroplastischen Harzen bestehen, deren Hauptkriterium es ist, daß sie in der Lage sind, das flächenförmige Textilmaterial so zu versteifen, daß es selbsttragend wird. Bevorzugt werden auch hier insbesondere Duroplaste, d.h. solche Harze, die bei erhöhter Temperatur unter Vernetzung zu einem unschmelzbaren Material hoher Steifigkeit aushärten. Bekannte derartige Harze, die auch in Form von Folien im Handel sind, sind z.B. ungesättigte Polyesterharze (Alkydharze), Mischungen aus ungesättigten Polyestern mit ungesättigten monomeren Verbindungen, wie z.B. Styrol, Epoxyharze, Phenolharze oder Melaminharze. Wie bereits oben beschrieben, werden auch die in Form von Folien vorliegenden Harze im unvernetzten Zustand, In welchem sie bei erhöhter Temperatur noch schmelzbar und fließfähig sind, in den Handel gebracht und appliziert. Die bei der hier besprochenen Ausführungsform des erfindungsgemäßen Herstellungsverfahrens der elektrisch leitenden Netzwerkstoffe einzusetzenden Folien aus unvernetzten Harzen haben eine Stärke von etwa 50 bis 500 »m, vorzugsweise von 100 bis 500 »m und ein Flächengewicht von etwa 50 bis 500 g/m², vorzugsweise 100 bis 500 g/m². Man erreicht durch Einsatz dieser Harze in der angegebenen Folienstärke etwa die gleiche Harzimprägnierung, wie bei der weiter oben beschriebenen Applikation der flüssigen Harzzubereitung durch herkömmliches Imprägnieren.

Unabhängig von der Art der Harzapplikation wird das harzimprägnierte, tiefziehfähige Textilmaterial oder das nicht imprägnierte Textilmaterial gemeinsam mit den erforderlichen Harzfolien in einer Tiefziehform auf eine solche Temperatur erwärmt, bei der das Harz fließfähig wird, dann in die gewünschte dreidimensionale Form gezogen und bei einer Temperatur, bei der das Harz aushärten kann, solange in dieser Form gehalten, bis der Härtungsprozeß des Harzes ganz oder zumindest so weit abgeschlossen ist, daß das tiefgezogene Material formstabil bleibt. Diese Bedingung kann bei Einsatz eines Duroplasten auch bereits bei noch nicht vollständiger Aushärtung gegeben sein. In diesem Fall kann aus ökonomischen Gründen es vorteilhaft sein, die vollständige Aushärtung durch Tempern des Formlings außerhalb des Tiefziehwerkzeuges z.B. durch eine Wärmenachbehandlung ca. 10 Min. bei 160 bis 200°C in einem Trockenofen auszuführen.

Die Temperatur, bei der das Schmelzen des unvernetzten Harzes erfolgt, liegt in der Regel bei 100 bis 250°C, vorzugsweise bei 140 bis 200°C.

Der erfindungsgemäß metallisierte Netzwerkstoff kann außer zur Herstellung von Sandwich-Körpern auch als Kolonnenfüllkörper eingesetzt werden, wobei sich eine hohe Zahl theoretischer Böden ergibt. Ferner kann das Material bei geeigneter Wahl des Überzugsmetalls als Katalysator oder als Katalysatorträger eingesetzt werden.

## Patentansprüche

1. Dreidimensional verformter, formstabiler Netzwerkstoff, dessen offene Maschen von den durch Tiefziehen gedehnten Maschen eines beharzten Gewebes oder einer beharzten Maschenware gebildet werden, dadurch gekennzeichnet daß er eine metallisierte Oberfläche hat, wobei der oberflächliche Metallüberzug eine Dicke von bis zu 300 »m aufweist.

2. Netzwerkstoff gemäß Anspruch 1, dadurch gekennzeichnet, daß der oberflächliche Metallüberzug aus einem nicht korrodierenden Metall besteht.

3. Netzwerkstoff gemäß Anspruch 2, dadurch gekennzeichnet, daß der oberflächliche Metallüberzug aus Kupfer oder Nickel besteht.

4. Netzwerkstoff gemäß mindestens einem der Ansprüche 1 bis 3, dadurch gekennzeichnet, daß der oberflächliche Metallüberzug mehrschichtig ist und/oder aus einer Metallegierung besteht und die unterste Schicht vorzugsweise eine Kupferschicht ist.

5. Netzwerkstoff gemäß mindestens einem der Ansprüche 1 bis 4, dadurch gekennzeichnet, daß die offenen Maschen der Netzstruktur von den durch Tiefziehen gedehnten Maschen eines Gewebes oder einer Maschenware gebildet werden.

6. Netzwerkstoff gemäß mindestens einem der Ansprüche 1 bis 5, dadurch gekennzeichnet, daß das Textilmaterial aus Synthesefasern, vorzugsweise aus Polyesterfasern besteht.

7. Netzwerkstoff gemäß mindestens einem der Ansprüche 1 bis 6, dadurch gekennzeichnet, daß das Harz des beharzten Textilmaterials ein ausgehärtetes Kunstharz, vorzugsweise ein Kondensationsharz ist und bezogen auf das Gewicht des beharzten Textilmaterials einen Anteil von 25 bis 65 Gew.-% hat.

8. Netzwerkstoff gemäß mindestens einem der Ansprüche 1 bis 7, dadurch gekennzeichnet, daß die durch Tiefziehen erzeugten Verformungen des Flächengebildes sich wenigstens in eine Richtung erstrecken, die eine Komponente senkrecht zur ursprünglichen Ebene des textilen Flächengebildes aufweist.

9. Verfahren zur Herstellung eines dreidimensional verformten, formstabilen, elektrisch leitfähigen Netzwerkstoffs, dadurch gekennzeichnet, daß man eine oder mehrere Schichten eines tiefziehfähigen Textilmaterials mit einem zur Strukturstabilisierung geeigneten Kunstharz imprägniert und das imprägnierte Material bei einer Temperatur, bei der das Harz fließfähig wird, durch Tiefziehen in die gewünschte Form bringt, die Temperatur so einstellt, daß das Harz erhärten kann und das geformte Material so lange in dieser Form hält, bis das Harz vollständig oder hinreichend erhärtet ist und das so erhaltene dreidimensional verformte, formstabile Material in an sich bekannter Weise auf chemischem und/oder elektrolytischem Wege oberflächlich mit einem Metallüberzug von bis zu 300 »m Dicke versieht.

10. Verfahren zur Herstellung eines dreidimensional verformten, formstabilen, elektrisch leitenden Netzwerkstoffs, dadurch gekennzeichnet, daß man eine oder mehrere Schichten eines tiefziehfähigen Textilmaterials und eine oder mehrere Harzfolien übereinanderstapelt und den Stapel bei einer Temperatur, bei der das Harz fließfähig wird, durch Tiefziehen in die gewünschte Form bringt, die Temperatur so einstellt, daß das Harz erhärten kann und den geformten Stapel so lange in dieser Form hält, bis das Harz vollständig oder hinreichend erhärtet ist und das so erhaltene dreidimensional verformte, formstabile Material in an sich bekannter Weise auf chemischem und/oder elektrolytischem Wege oberflächlich mit einem Metallüberzug von bis zu 300 »m Dicke versieht.

11. Verfahren gemäß einem der Ansprüche 9 oder 10, dadurch gekennzeichnet, daß das durch Imprägnieren oder in Form einer Folie auf das Textilmaterial applizierte Harz in einer Menge von 50 bis 500 g/m2 des Textilmaterials eingesetzt wird.

12. Verwendung des dreidimensional verformten, formstabilen, metallisierten Netzwerkstoffs des Anspruchs 1 zur Herstellung von flächenförmigen Sandwichkörpern.

13. Verwendung des dreidimensional verformten, formstabilen, metallisierten Netzwerkstoffs des Anspruchs 1 als Füllkörper für Kolonnen.

14. Verwendung des dreidimensional verformten, formstabilen, metallisierten, Netzwerkstoffs des Anspruchs 1 als Katalysator oder Katalysatorträger.

## Claims

1. A three-dimensionally deformed, form-stable network material whose open meshes are formed from the meshes, extended by deep drawing, of a resinated woven fabric or of a resinated knitted fabric, characterized in that it has a metallized surface, the surface metal coating having a thickness of up to 300 »m.

2. A network material as claimed in claim 1, characterized in that the surface metal coating consists of a non-corroding metal.

3. A network material as claimed in claim 2, characterized in that the surface metal coating consists of copper or nickel.

4. A network material as claimed in at least one of claims 1 to 3, characterized in that the surface metal coating is a multilayer coating and/or consists of a metal alloy, and the lowest layer is preferably a copper layer.

5. A network material as claimed in at least one of claims 1 to 4, characterized in that the open meshes of the network structure are formed from the meshes, extended by deep drawing, of a woven fabric or of a knitted fabric.

6. A network material as claimed in at least one of claims 1 to 5, characterized in that the textile material consists of synthetic fibers, preferably polyester fibers.

7. A network material as claimed in at least one of claims 1 to 6, characterized in that the resin of the resinated textile material is a hardened synthetic resin, preferably a condensation resin, and represents a proportion of 25 to 65% by weight, based on the weight of the resinated textile material.

8. A network material as claimed in at least one of claims 1 to 7, characterized in that the deformations of the sheetlike structure, produced by deep drawing, extend at least in a direction which has a component perpendicular to the original plane of the textile sheet material.

9. A process for the manufacture of a three-dimensionally deformed, form-stable, electrically conductive network material, characterized in that one or more layers of a textile material capable of being deep drawn are impregnated with a synthetic resin suitable for stabilization of the structure, the impregnated material is converted to the desired shape by deep drawing at a temperature at which the resin becomes free-flowing, the temperature is adjusted so that the resin can harden, the shaped material is kept in this shape until the resin has hardened completely or sufficiently, and the resulting three-dimensionally deformed, form-stable material is provided on the surface in a manner known per se, by a chemical or electrolytic method, with a metal coating up to 300 »m thick.

10. A process for the manufacture of a three-dimensionally deformed, form-stable, electrically conductive network material, characterized in that one or more layers of a textile material capable of being deep drawn and one or more resin films are stacked on top of one another, the stack is converted to the desired shape by deep drawing at a temperature at which the resin becomes free-flowing, the temperature is adjusted so that the resin can harden, the shaped stack is kept in this shape until the resin has hardened completely or sufficiently, and the resulting three-dimensionally deformed, form-stable material is provided on the surface in a manner known per se, by a chemical or electrolytic method, with a metal coating up to 300 »m thick.

11. A process as claimed in one of claims 9 and 10, characterized in that the resin applied to the textile material by impregnation or in the form of a film is used in an amount of 50 to 500 g/m² of the textile material.

12. Use of the three-dimensionally deformed, form-stable, metallized network material of claim 1 for the manufacture of sheetlike sandwich materials.

13. Use of the three-dimensionally deformed, form-stable, metallized network material of claim 1 as a packing material for columns.

14. Use of the three-dimensionally deformed, dimensionally stable, metallized network material of claim 1 as a catalyst or catalyst support.

## Revendications

1. Matériau réticulaire indéformable, déformé dans les trois dimensions, dont les mailles ouvertes sont formées par les mailles, étirées par emboutissage, d'un tissu ou une étoffe à mailles enduit ou imprégné de résine, caractérisé en ce qu'il possède une surface métallisée, le revêtement superficiel de métal présentant une épaisseur de jusqu'à 300 »m.

2. Matériau réticulaire selon la revendication 1, caractérisé en ce que le revêtement superficiel de métal est composé d'un métal non corrodable.

3. Matériau réticulaire selon la revendication 2, caractérisé en ce que le revêtement superficiel de métal est composé de cuivre ou de nickel.

4. Matériau réticulaire selon au moins une des revendications 1 à 3, caractérisé en ce que le revêtement superficiel de métal est multicouche et/ou composé d'un alliage métallique, et la couche extrême inférieure est de préférence une couche de cuivre.

5. Matériau réticulaire selon au moins une des revendications 1 à 4, caractérisé en ce que les mailles ouvertes de la structure réticulaire sont formées par les mailles étirées par emboutissage d'un tissu ou d'une étoffe à mailles.

6. Matériau réticulaire selon au moins une des revendications 1 à 5, caractérisé en ce que la matière textile est faite de fibres synthétiques, de préférence de fibres de polyester.

7. Matériau réticulaire selon au moins une des revendications 1 à 6, caractérisé en ce que la résine de la matière textile enduite ou imprégnée de résine est une résine synthétique durcie, de préférence une résine de condensation et représente une proportion de 25 à 65 % rapportée au poids de la matière textile enduite ou imprégnée de résine.

8. Matériau réticulaire selon au moins une des revendications 1 à 7, caractérisé en ce que les déformations de l'élément de forme générale plate qui sont produites par emboutissage s'étendent au moins dans une direction qui présente une composante perpendiculaire au plan initial de l'élément textile de forme générale plate.

9. Procédé de fabrication d'un matériau réticulaire déformé dans les trois dimensions, indéformable, conducteur de l'électricité, caractérisé en ce qu'on imprègne une ou plusieurs couches d'une matière textile emboutissable d'une résine synthétique appropriée pour la stabilisation de la structure, et qu'on met la matière imprégnée à la forme voulue par emboutissage à une température à laquelle la résine devient fluide, on règle la température de manière que la résine puisse durcir et on maintient la température de la pile mise en forme dans cette forme jusqu'à ce que la résine soit totalement ou suffisamment durcie, et on munit superficiellement la matière indéformable, déformée dans les trois dimensions, ainsi obtenue, d'une façon connue, d'un revêtement métallique de jusqu'à 300 »m d'épaisseur, par voie chimique et/ou électrolytique.

10. Procédé de fabrication d'une structure réticulaire déformée dans les trois dimensions, indéformable, conductrice de l'électricité, caractérisé en ce qu'on empile en superposition une ou plusieurs couches d'une matière textile emboutissable et une ou plusieurs feuilles de résine, et on met la pile à la forme désirée par emboutissage à une température à laquelle la résine devient fluide, on règle la température de manière que la résine puisse durcir et on maintient la pile mise en forme dans cette forme jusqu'à ce que la résine soit totalement ou suffisamment durcie, et on munit superficiellement la matière indéformable, déformée dans les trois dimensions, ainsi obtenue, d'un façon connue, d'un revêtement métallique de jusqu'à 300 »m d'épaisseur, par voie chimique et/ou électrolytique.

11. Procédé selon une des revendications 9 à 10, caractérisé en ce que la résine appliquée sur la matière textile par imprégnation ou sous la forme d'une feuille est utilisée en une quantité de 50 à 500 g/m² de la matière textile.

12. Utilisation du matériau réticulaire déformé dans les trois dimensions, indéformable, métallisé, de la revendication 1, pour la fabrication de corps stratifiés de forme générale plate.

13. Utilisation du matériau réticulaire déformé dans les trois dimensions, indéformable, métallisé, de la revendication 1, en tant que corps de garnissage pour des colonnes.

14. Utilisation du matériau réticulaire déformé dans les trois dimensions, indéformable, métallisé, de la revendication 1, en qualité de catalyseur ou de support de catalyseur.
